(19) Europäisches Patentamt
European Patent Office
Office européen des brevets

(11) **EP 2 141 608 A1**

(12) **EUROPÄISCHE PATENTANMELDUNG**

(43) Veröffentlichungstag:
06.01.2010 Patentblatt 2010/01

(51) Int Cl.:
*G06F 17/27* (2006.01)   *G06F 17/30* (2006.01)
*G06F 3/023* (2006.01)

(21) Anmeldenummer: 09100268.3

(22) Anmeldetag: 07.05.2009

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.07.2008 DE 102008040169**

(71) Anmelder: **Robert Bosch GmbH**
**70442 Stuttgart (DE)**

(72) Erfinder: **Vogel, Andreas**
**31139, Hildesheim (DE)**

(54) **Verfahren und Vorrichtung zum Überprüfen, ob eine Datenbasis eine Zeichenkette enthält, die eine vorgegebene Teilzeichenkette enthält**

(57) Es wird ein Verfahren und eine zur Durchführung dieses Verfahrens geeignete Vorrichtung zur Überprüfung vorgeschlagen, ob in einer ersten Datenbasis (10) mit einer Vielzahl verschiedener Zeichenketten zumindest eine Zeichenkette vorhanden ist, welche eine vorgegebene Teilzeichenkette enthält. Dabei wird eine zweite Datenbasis mit allen Zeichenkettenenden der jeweiligen Zeichenketten bereitgestellt (11) und durch Abgleich (12) der Teilzeichenkette mit den Zeichenkettenanfängen der Zeichenkettenenden festgestellt (13, 14), ob zumindest ein Zeichenkettenende vorhanden ist, welches die Teilzeichenkette am Anfang aufweist.

Fig. 1

EP 2 141 608 A1

**Beschreibung**

Die Erfindung beschreibt ein Verfahren sowie eine Vorrichtung zum Überprüfen, ob in einer Datenbasis mit einer Vielzahl verschiedener Zeichenketten zumindest eine Zeichenkette vorhanden ist, welche eine vorgegebene Teilzeichenkette enthält. Eine solche Überprüfung erfolgt in der Regel, wenn eine lange, vorgegebene Liste mit Zeichenketten, insbesondere mit Wörtern und/oder Namen, vorliegt und herausgefunden werden soll, ob und ggf. welche Zeichenketten in dieser Liste vorhanden sind, die eine bestimmte vorgegebene Teilzeichenkette enthalten.

Stand der Technik

Aus den Patentanmeldungen WO 03/067193 A1, DE 100 22 970 A1 und EP 1120633 A2 sind Verfahren zur Eingabe von Zeichenfolgen bekannt, bei welchen der Bediener eines Navigationsgerätes bei der Eingabe eines Zielortes automatisch unterstützt wird. So empfiehlt z.B. die EP 1120633 A2, dem Bediener eines Navigationsgerätes nach dessen Eingabe einer Initial-Zeichenkette bei Übereinstimmung dieser Zeichenkette mit dem Wortanfang von eingespeicherten Zielorten alle möglichen Zielnamen mit diesem Wortanfang auf einem Display anzuzeigen. Der Bediener kann dann bei Erkennen des von ihm gewünschten Zielortes in der angezeigten Liste diesen Zielort direkt vom Display auswählen, ohne den gesamten Namen des gewünschten Zielortes in voller Länge eingeben zu müssen.

Insbesondere bei der Bedienung eines Navigationsgerätes taucht jedoch des Öfteren das Problem auf, wenn man einen Stadt- oder Straßennamen eingeben will, aber nicht den exakten Namen des Zielortes kennt, sondern sich nur an einen Teil des Namens erinnert. Beispielsweise ist nur noch bekannt, dass im gesuchten Namen das Teilwort "-kirchen-" vorkommt, wobei aber auch nicht bekannt ist, ob das Teilwort am Anfang, in der Mitte oder am Ende des Namens lokalisiert ist. In einem solchen Fall sind Verfahren bzw. Systemkonfigurationen, wie sie in der EP 1120633 A2 erläutert sind, überfordert, da durch sie nur Zielorte gefunden werden können, welche die vom Bediener vorgegebene Teilzeichenkette am Anfang aufweisen.

Vorteile der Erfindung

Die vorliegende Erfindung stellt ein Verfahren und eine Vorrichtung zur Verfügung, mit denen eine derart unspezifische Suchanfrage mit einer an beliebiger Stelle lokalisierter Teilzeichenkette so schnell abgearbeitet werden kann, dass dem Anwender in Echtzeit noch während der Eingabe die Ergebnisse zur Auswahl präsentiert werden können.

Nach gängiger Nomenklatur werden im Folgenden die Zeichenketten bzw. die Teilzeichenketten auch als Strings bzw. Teilstrings bezeichnet. Die Strings werden beispielsweise aus Buchstaben, Ziffern und/oder aus anderen Zeichen des ASCII-Codes gebildet. Prinzipiell sind aber auch anders geartete Zeichen zur Bildung von Strings denkbar.

Im folgenden werden einige Begriffe definiert, die zur Beschreibung der vorliegenden Erfindung notwendig sind. Zunächst werden die Begriffe "Zeichenkettenanfang" und "Zeichenkettenende" erläutert. Eine Zeichenkette (auch als String bezeichnet, insbesondere: ein Wort) kann in zwei Teile geteilt werden. Die Zeichenkette besteht dann aus dem Zeichenkettenanfang und dem Zeichenkettenende. Zeichenkettenanfang und Zeichenkettenende können auch leer sein.

Hierzu folgendes Beispiel:

Die Zeichenkette ABCDE kann nach obiger Definition in Zeichenkettenanfang und Zeichenkettenende aufgespaltet werden, wobei $\varnothing$ das Zeichen für den leeren String ist:

$$\varnothing + ABCDE$$

$$A + BCDE$$

$$AB + CDE$$

$$ABC + DE$$

$$ABCD + E$$

$$ABCDE + \varnothing$$

Des Weiteren wird nun erläutert, was unter einer "inversen Zeichenkette" zu verstehen ist. Eine inverse Zeichenkette entsteht durch das Invertieren einer ursprünglichen Zeichenkette. Dabei wird die ursprüngliche Zeichenkette von hinten nach vorne geschrieben, also rückwärts. Beispielsweise wird aus der ursprünglichen Zeichenkette ABCDE durch Invertieren die inverse Zeichenkette EDCBA.

Grundgedanke der vorliegenden Erfindung ist das Bereitstellen einer Datenbasis, welche zu einer vorgegebenen Anzahl verschiedener Zeichenketten jeweils alle möglichen Zeichenkettenenden aufweist. Durch Abgleich der vorgegebenen Teilzeichenkette mit den Zeichenkettenanfängen dieser Zeichenkettenenden kann festgestellt werden, ob zumindest ein Zeichenkettenende vorhanden ist, welches die Teilzeichenkette am Anfang aufweist. Das hat den Vorteil, dass die Überprüfung auf der einfachen Basis von Vergleichen von Stringanfängen erfolgen kann, welche in softwaretechnisch automatisierten Programmabläufen sehr schnell durchgeführt werden können. Dabei kann die Überprüfung auf der Grundlage von Vergleichen von Stringanfängen erfolgen, obwohl die Position des vorgegebenen Teilstrings im gesuchten String nicht bekannt ist.

Für den Fall, dass obiger Abgleich ergibt, dass kein Zeichenkettenende vorhanden ist, welches die Teilzeichenkette am Anfang aufweist, ist damit auch unmittelbar klar, dass unter der vorgegebenen Anzahl verschiedener Zeichenketten keine vorhanden ist, welche die vorgegebene Teilzeichenkette enthält. Dieses Ergebnis der Überprüfung kann der Person, welche die Teilzeichenkette als Überprüfungskriterium eingegeben hat, visuell oder anderweitig mitgeteilt werden. Vorzugsweise kann die Anzeige dieses Ergebnisses auch mit einer Aufforderung verbunden sein, eine andere Teilzeichenkette vorzugeben, mit der dann eine erneute Überprüfung vorgenommen werden kann.

Im anderen Fall ergibt obiger Abgleich, dass zumindest ein Zeichenkettenende vorhanden ist, welches die Teilzeichenkette am Anfang aufweist. Damit ist implizit das Ergebnis verbunden, dass unter der vorgegebenen Anzahl verschiedener Zeichenketten zumindest eine Zeichenkette vorhanden ist, welche die vorgegebene Teilzeichenkette enthält.

Gemäß einer bevorzugten Ausführungsform der vorliegenden Erfindung kann das oben beschriebene Überprüfungsverfahren für letzteren Fall dahingehend ergänzt werden, dass über das (positive) Überprüfungsergebnis hinaus auch alle die vorgegebene Teilzeichenkette enthaltenden Zeichenketten gefunden und vorzugsweise auch in Echtzeit angezeigt werden. Dazu werden zunächst nach dem oben bereits beschriebenen Abgleichsprinzip alle diejenigen Zeichenkettenenden gefunden, welche die vorgegebene Teilzeichenkette am Anfang aufweisen.

Ziel ist es nun, diesen gefundenen Zeichenkettenenden die zugehörigen (vollständigen) Zeichenketten zuzuordnen. Wie bereits oben erläutert, wäre es dabei besonders vorteilhaft, wenn diese Zuordnung auf der einfachen Basis von Vergleichen von Stringanfängen erfolgen könnte, welche in softwaretechnisch automatisierten Programmabläufen sehr schnell durchgeführt werden können. Dies kann vorzugsweise durch das Bereitstellen einer weiteren Datenbasis erfolgen, welche alle Zeichenketten in invertierter Form enthält. Weiterhin werden die bereits gefundenen Zeichenkettenenden, welche die vorgegebene Teilzeichenkette am Anfang aufweisen, invertiert. Durch Abgleich der invertierten gefundenen Zeichenkettenenden mit den Anfängen der inversen Zeichenketten werden dann alle diejenigen inversen Zeichenketten gefunden, welche eines der invertierten gefundenen Zeichenkettenenden am Anfang aufweisen. Durch Invertieren der inversen Zeichenketten, welche eines der invertierten gefundenen Zeichenkettenenden am Anfang aufweisen, werden alle die vorgegebene Teilzeichenkette enthaltenden Zeichenketten erhalten. Diese können dann der Person, welche die Teilzeichenkette vorgegeben hat, zur Auswahl angezeigt werden, beispielsweise auf einem Display.

Es ist vorteilhaft, alle doppelten und mehrfachen Fundergebnisse von inversen Zeichenketten, welche eines der invertierten gefundenen Zeichenkettenenden am Anfang aufweisen, bis auf ein einziges Fundergebnis aus der Fundliste zu entfernen. Damit wird vermieden, dass nach der abschließenden Rückinvertierung ein und dieselbe Zeichenkette mehrfach angezeigt wird. Dieser optionale Schritt erhöht also die Übersichtlichkeit der angezeigten Auswahlliste.

Ferner ist es vorteilhaft, aus der Datenbasis, welche zu der vorgegebenen Anzahl verschiedener Zeichenketten jeweils alle möglichen Zeichenkettenenden aufweist, alle Mehrfacheinträge bis auf einen einzigen Eintrag zu entfernen. Dadurch kann die Anzahl der Abgleichsvorgänge auf ein Minimum beschränkt werden, was bei gleicher Rechenkapazität die Schnelligkeit des Verfahrens erhöht.

Eine besonders ausgeprägte Steigerung der Performance des erfindungsgemäßen Verfahrens lässt sich erreichen, wenn die Anzahl von Zeichen in der vorzugebenden Teilzeichenkette einen vorbestimmten Wert nicht unterschreitet. Die minimale Anzahl von Zeichen in der vorzugebenden Teilzeichenkette ist vorzugsweise gleich 3 oder 4. Damit muss die Datenbasis, welche zu der vorgegebenen Anzahl verschiedener Zeichenketten jeweils alle möglichen Zeichenkettenenden aufweist, nur mit Zeichenkettenenden gefüllt werden, die noch aus wenigstens 3 bzw. 4 Zeichen bestehen. Dies stellt eine enorme Reduzierung der Einträge in der Datenbasis dar, was die Anzahl der notwendigen Abgleichsvorgänge verringert und somit wiederum bei gleicher Rechenkapazität die Schnelligkeit des Verfahrens erhöht. Die Vorgabe einer minimalen Anzahl von Zeichen in der vorzugebenden Teilzeichenkette ist aber nicht nur aus prozessökonomischen Gründen sinnvoll, denn es hat sich bei Versuchen herausgestellt, dass ein lediglich zweibuchstabiger Teilstring eine so geringe Kennzeichnungskraft in der Erinnerung der Anwender aufweist, dass er ohnehin nur sehr selten vom Anwender als Suchkriterium eingesetzt würde.

Ferner kann statt der Suche nach einer absoluten Übereinstimmung einer vorgegebenen Teilzeichenkette mit einer Vielzahl verschiedener Zeichenketten auch eine fehlertolerante Suche durchgeführt werden. Dadurch könnten in vorteilhafter Weise Rechtschreibfehler bei der Eingabe der Teilzeichenkette ausgeglichen werden.

Die oben beschriebenen Verfahren lassen sich in vorteilhafter Weise zum Auffinden eines Fahrziels mit Hilfe einer Navigationseinrichtung verwenden, wenn sich der Benutzer der Navigationseinrichtung nur noch an einen Teil des Stadt- oder Straßennamens erinnern kann, den er in die Navigationseinrichtung eingeben will, und er darüber hinaus noch nicht einmal genau weiß, an welcher Stelle im vollständigen Namen der Teil liegt.

Da die erfindungsgemäßen Verfahren vorzugsweise softwaremäßig realisiert werden, umfasst die vorliegende Erfindung auch ein Programm, welches auf einem computerlesbaren Speichermedium gespeichert ist, wobei das Programm eingerichtet ist, die jeweiligen Verfahrensschritte der Verfahren durchzuführen.

Dementsprechend umfasst die vorliegende Erfindung auch eine Vorrichtung zur Durchführung der beschriebenen Verfahren, insbesondere eine Vorrichtung mit einem Speichermedium zum Speichern der Dateninhalte der Datenbasen, mit einer Vergleichseinrichtung zur Durchführung der Abgleichsschritte und zur Realisierung des Auffindens der Übereinstimmungen aus den Abgleichsschritten, und mit einer Steuereinrichtung zur Durchführung der Invertierungsschritte

Bezüglich der technischen Wirkungen und Vorteile der gegenständlichen Merkmale dieser Vorrichtung wird explizit auf die Ausführungen zu den oben beschriebenen Verfahren verwiesen, welche vollumfänglich in Bezug genommen werden.

Weitere Merkmale und Vorteile von Ausführungsformen der Erfindung ergeben sich aus der nachfolgenden Beschreibung mit Bezug auf die beigefügten Figuren.

Kurzbeschreibung der Figuren

Es zeigen:

Fig. 1 ein beispielhaftes Ablaufdiagramm des Überprüfungsverfahrens gemäß einer Ausführungsform der vorliegenden Erfindung,

Fig. 2 ein beispielhaftes Ablaufdiagramm einer weiteren, bevorzugten Ausführungsform des erfindungsgemäßen Verfahrens, und

Fig. 3 ein Blockschaltbild einer Ausführungsform der erfindungsgemäßen Vorrichtung zur Durchführung der beschriebenen Verfahren.

Beschreibung der Ausführungsbeispiele

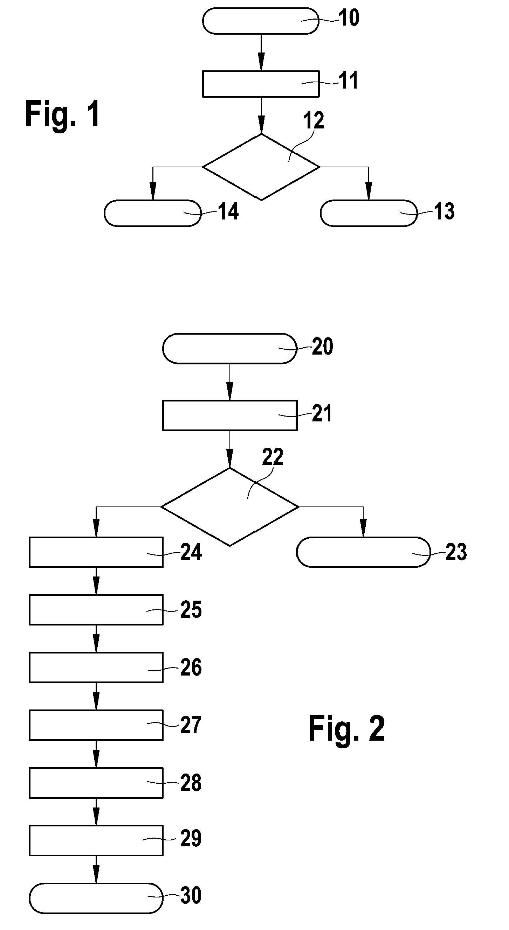

Zunächst wird unter Bezugnahme auf Fig. 1 das Überprüfungsverfahren gemäß einer Ausführungsform der vorliegenden Erfindung erläutert.

Die Ausgangssituation 10 in Fig. 1 stellt das Vorhandensein einer ersten Datenbasis mit einer Vielzahl verschiedener Zeichenketten dar. Im Schritt 11 wird ausgehend von den Elementen der ersten Datenbasis eine zweite Datenbasis mit allen Zeichenkettenenden der jeweiligen Zeichenketten der ersten Datenbasis bereitgestellt. Die zweite Datenbasis muss dabei nicht unbedingt getrennt von der ersten Datenbasis vorliegen. Vielmehr ist es auch möglich, die zweite Datenbasis dadurch zu realisieren, indem in die erste Datenbasis alle "echten" Zeichenkettenenden eingefügt werden, also alle Zeichenkettenenden, die durch Abtrennen eines nichtleeren Zeichenkettenanfangs entstehen.

Im Entscheidungsschritt 12 erfolgt der Abgleich der vorgegebenen Teilzeichenkette mit den Anfängen der Zeichenkettenenden aus der zweiten Datenbasis. Durch diesen Abgleich kann festgestellt werden, ob in der zweiten Datenbasis zumindest ein Zeichenkettenende vorhanden ist, welches die Teilzeichenkette am Anfang aufweist.

Für den Fall, dass obiger Abgleich ergibt, dass kein Zeichenkettenende vorhanden ist, welches die Teilzeichenkette am Anfang aufweist, verzweigt sich das Überprüfungsverfahren zum Endschritt 13. In diesem Schritt wird das Ergebnis ausgegeben, dass unter der vorgegebenen Anzahl verschiedener Zeichenketten der ersten Datenbasis keine vorhanden ist, welche die vorgegebene Teilzeichenkette enthält.

Im anderen Fall verzweigt sich das Überprüfungsverfahren zum Endschritt 14. In diesem Schritt wird das Ergebnis ausgegeben, dass zumindest ein Zeichenkettenende vorhanden ist, welches die Teilzeichenkette am Anfang aufweist. Damit ist implizit das Ergebnis verbunden, dass unter der vorgegebenen Anzahl verschiedener Zeichenketten zumindest eine Zeichenkette vorhanden ist, welche die vorgegebene Teilzeichenkette enthält.

Unter Bezugnahme auf Fig. 2 wird nun eine weitere, bevorzugte Ausführungsform des erfindungsgemäßen Verfahrens erläutert. Das in Fig. 2 schematisch dargestellte Verfahren entspricht in seinen Schritten 20, 21, 22 und 23 den in Zusammenhang mit Fig. 1 erläuterten Schritten 10, 11, 12 und 13. Lediglich der Schritt 24 in Fig. 2 unterscheidet sich vom Schritt 14 der Fig. 1 dahingehend, dass Schritt 24 kein Endschritt ist und in ihm über das positive Überprüfungsergebnis hinaus auch alle die vorgegebene Teilzeichenkette enthaltenden Zeichenketten gefunden und vorzugsweise auch in Echtzeit angezeigt werden. Dazu werden im Schritt 24 nach dem oben im Zusammenhang mit Schritt 12 bereits beschriebenen Abgleichsprinzip alle diejenigen Zeichenkettenenden gefunden, welche die vorgegebene Teilzeichenkette am Anfang aufweisen.

Die auf den Schritt 24 folgenden Schritte 25 bis 30 haben zum Ziel, diesen aus der zweiten Datenbasis ausgefilterten Zeichenkettenenden die zugehörigen vollständigen Zeichenketten der ersten Datenbasis zuzuordnen. Dazu wird zunächst im Schritt 25 eine dritte Datenbasis bereitgestellt, welche alle Zeichenketten der ersten Datenbasis in invertierter Form enthält. Das Bereitstellen der dritten Datenbasis kann aber auch schon früher erfolgen, beispielsweise am Anfang des Verfahrens, insbesondere vor, während oder nach dem Schritt 21, in welchem die zweite Datenbasis bereitgestellt wird. Im Schritt 26 werden die bereits gefundenen Zeichenkettenenden, welche die vorgegebene Teilzeichenkette am Anfang aufweisen, invertiert. Durch Abgleich der invertierten gefundenen Zeichenkettenenden mit den Anfängen der inversen Zeichenketten im Schritt 27 werden dann im Schritt 28 alle diejenigen inversen Zeichenketten gefunden, welche eines der invertierten gefundenen Zeichenkettenenden am Anfang aufweisen. Im Schritt 29 erfolgt dann das Invertieren der inversen Zeichenketten, welche eines der invertierten gefundenen Zeichenkettenenden am Anfang aufweisen, so dass im Endschritt 30 alle die vorgegebene Teilzeichenkette enthaltenden Zeichenketten erhalten werden. Im Endschritt 30 können letztere dann der Person, welche die Teilzeichenkette vorgegeben hat, zur Auswahl angezeigt werden, beispielsweise auf einem Display.

Nachfolgend wird das in Fig. 2 skizzierte Verfahren an einem konkreten Fallbeispiel verdeutlicht:

Die erste Datenbasis (Wortliste) umfasst folgende Zeichenketten (Wörter):

abc
fgabab
fgd

Dann besteht die zweite Datenbasis mit allen Zeichenkettenenden (Wortenden) der Wörter der ersten Datenbasis aus folgenden Wortenden:

abc, bc, c, fgabab, gabab, abab, bab, ab, b, fgd, gd, d
Optional kann diese Liste auch alphabetisch geordnet werden:
ab, abab, abc, b, bab, bc, c, d, fgabab, fgd, gabab, gd

Die dritte Datenbasis mit den inversen Wörtern der ersten Datenbasis besteht aus folgenden Einträgen:

cba, babagf, dgf

Als Teilzeichenkette werde nun vom Anwender der String "ab" vorgegeben.
Gesucht werden also zunächst alle Wortenden aus der zweiten Datenbasis, die den String "ab" am Anfang aufweisen. Durch den Abgleich des Strings "ab" mit den Anfängen der Wortenden werden folgende Wortenden aufgefunden und aus der zweiten Datenbasis ausgefiltert:

ab, abab, abc

Invertieren dieser aufgefundenen Wortenden ergibt folgendes:

ba, baba, cba

Nun werden diese invertierten aufgefundenen Wortenden mit den Anfängen der inversen Wörter der dritten Datenbasis abgeglichen. Durch diesen Abgleich werden alle diejenigen inversen Wörter aufgefunden und aus der dritten Datenbasis ausgefiltert, welche eines dieser invertierten aufgefundenen Wortenden am Anfang aufweisen:

babagf, babagf, cba

Dabei rührt das erste "babagf" vom invertierten aufgefundenen Wortende "ba" her, und das zweite "babagf" vom invertierten aufgefundenen Wortende "baba"
Das Entfernen der doppelten Fundergebnisse von inversen Wörtern, welche eines der invertierten aufgefundenen Wortenden am Anfang aufweisen, bis auf ein einziges Fundergebnis reduziert die Fundliste auf:

babagf, cba

Durch abschließendes Invertieren der Elemente dieser Fundliste erhält man die vollständige Liste der Wörter aus der ersten Datenbasis (Wortliste), welche den vorgegebenen String "ab" enthalten:

fgabab, abc

Das oben beschriebene Verfahren hat den Vorteil, dass das Auffinden aller die vorgegebene Teilzeichenkette enthaltenden Zeichenketten (Wörter) aus der ersten Datenbasis auf der einfachen Basis von Vergleichen von Stringanfängen erfolgen kann, welche in softwaretechnisch automatisierten Programmabläufen sehr schnell durchgeführt werden können. Dabei kann das Auffinden auf der Grundlage von Vergleichen von Stringanfängen erfolgen, obwohl die Position der vorgegebenen Teilzeichenkette in der gesuchten Zeichenkette (Wort) nicht bekannt ist.

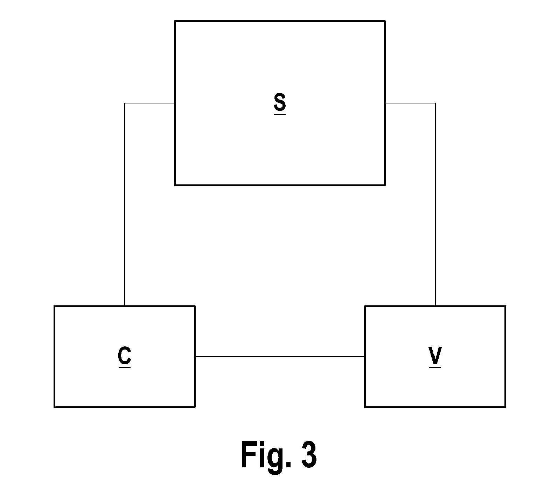

In Fig. 3 ist beispielhaftes Blockschaltbild einer Ausführungsform der erfindungsgemäßen Vorrichtung dargestellt, welche zur Durchführung der oben beschriebenen Verfahren und der Verfahren nach einem der Ansprüche 1 bis 7 eingerichtet ist. Diese Vorrichtung weist ein Speichermedium S zum Speichern der Dateninhalte der ersten, zweiten und/oder dritten Datenbasen 10, 11; 20, 21, 25, eine Vergleichseinrichtung V zur Durchführung der Abgleichsschritte 12; 22, 27 und zur Realisierung des Auffindens 24, 28 der Übereinstimmungen aus den Abgleichsschritten, und eine Steuereinrichtung C zur Durchführung der Invertierungsschritte 26, 29 auf. Die Steuereinrichtung C kann, wie in Fig. 3 dargestellt, mit der Vergleichseinrichtung V verbunden sein, um letztere zu steuern. Wahlweise kann die Vergleichseinrichtung V aber auch über eine eigene Steuerungseinrichtung (nicht dargestellt) verfügen.

**Patentansprüche**

1. Verfahren zum Überprüfen, ob in einer ersten Datenbasis (10) mit einer Vielzahl verschiedener Zeichenketten zumindest eine Zeichenkette vorhanden ist, welche eine vorgegebene Teilzeichenkette enthält, wobei eine zweite Datenbasis mit allen Zeichenkettenenden der jeweiligen Zeichenketten bereitgestellt wird (11), und wobei durch Abgleich (12) der Teilzeichenkette mit den Zeichenkettenanfängen der Zeichenkettenenden festgestellt wird (13, 14), ob zumindest ein Zeichenkettenende vorhanden ist, welches die Teilzeichenkette am Anfang aufweist.

2. Verfahren nach Anspruch 1, welches für den Fall, dass die Überprüfung ergibt, dass zumindest eine Zeichenkette in der ersten Datenbasis vorhanden ist, welche die Teilzeichenkette enthält, geeignet ist zum Auffinden aller die Teilzeichenkette enthaltenden Zeichenketten in der ersten Datenbasis (20), wobei durch den Abgleich (22) der Teilzeichenkette mit den Zeichenkettenanfängen der Zeichenkettenenden alle diejenigen Zeichenkettenenden gefunden werden (24), welche die Teilzeichenkette am Anfang aufweisen.

3. Verfahren nach Anspruch 2, wobei eine dritte Datenbasis (25) mit inversen Zeichenketten bereitgestellt wird, welche alle Zeichenketten der ersten Datenbasis in umgekehrter Zeichenfolge enthält, wobei die gefundenen Zeichenkettenenden, welche die Teilzeichenkette am Anfang aufweisen, invertiert werden (26), und wobei durch Abgleich (27) der invertierten gefundenen Zeichenkettenenden mit den Zeichenkettenanfängen der inversen Zeichenketten alle diejenigen inversen Zeichenketten gefunden werden (28), welche eines der invertierten gefundenen Zeichenkettenenden am Anfang aufweisen.

4. Verfahren nach Anspruch 3, wobei die inversen Zeichenketten, welche eine der invertierten gefundenen Zeichenketten am Anfang aufweisen, invertiert werden (29), um so alle die Teilzeichenkette enthaltenden Zeichenketten aus der ersten Datenbasis zu erhalten (30).

5. Verfahren nach Anspruch 3 oder 4, wobei alle doppelten und mehrfachen Fundergebnisse (28) von inversen Zeichenketten, welche eines der invertierten gefundenen Zeichenkettenenden am Anfang aufweisen, bis auf ein einziges Fundergebnis aus der Fundliste entfernt werden.

6. Verfahren nach einem der Ansprüche 1 bis 5, zum Auffinden zumindest einer die Teilzeichenkette enthaltenden Zeichenkette in der ersten Datenbasis (20) mit einer Vielzahl verschiedener Zeichenketten, umfassend folgende Schritte:

   Bereitstellen (21) einer zweiten Datenbasis mit allen Zeichenkettenenden der jeweiligen Zeichenketten,
   Abgleichen (22) der Teilzeichenkette mit den Zeichenkettenanfängen der Zeichenkettenenden,
   Auffinden (24) all derjenigen Zeichenkettenenden, welche die Teilzeichenkette am Anfang aufweisen,
   Bereitstellen (25) einer dritten Datenbasis mit inversen Zeichenketten, welche alle Zeichenketten der ersten Datenbasis in umgekehrter Zeichenfolge enthält,
   Invertieren (26) der gefundenen Zeichenkettenenden, welche die Teilzeichenkette am Anfang aufweisen,
   Abgleichen (27) der invertierten gefundenen Zeichenkettenenden mit den Zeichenkettenanfängen der inversen Zeichenketten,
   Auffinden (28) all derjenigen inversen Zeichenketten, welche eines der invertierten gefundenen Zeichenkettenenden am Anfang aufweisen, und
   Invertieren (29) der inversen Zeichenketten, welche eines der invertierten gefundenen Zeichenkettenenden am Anfang aufweisen.

7. Verfahren nach Anspruch 6, ferner umfassend den Schritt des Entfernens aller doppelten und mehrfachen Fundergebnisse von inversen Zeichenketten, welche eines der invertierten gefundenen Zeichenkettenenden am Anfang aufweisen, bis auf ein einziges Fundergebnis aus der Fundliste.

8. Vorrichtung zur Durchführung des Verfahrens nach einem der Ansprüche 1 bis 7, insbesondere mit einem Speichermedium (S) zum Speichern der Dateninhalte der ersten, zweiten und/oder dritten Datenbasen (10, 11; 20, 21, 25), mit einer Vergleichseinrichtung (V) zur Durchführung der Abgleichsschritte (12; 22, 27) und zur Realisierung des Auffindens (24, 28) der Übereinstimmungen aus den Abgleichsschritten, und mit einer Steuereinrichtung (C) zur Durchführung der Invertierungsschritte (26, 29).

9. Verwendung des Verfahrens nach einem der Ansprüche 1 bis 7 zum Auffinden eines Fahrziels mit Hilfe einer Navigationseinrichtung.

10. Programm, welches auf einem computerlesbaren Speichermedium gespeichert ist, wobei das Programm eingerichtet ist, die jeweiligen Verfahrensschritte der Verfahren nach einem der Ansprüche 1 bis 7 durchzuführen.

**Fig. 1**

**Fig. 2**

Fig. 3

Europäisches Patentamt
European Patent Office
Office européen des brevets

## EUROPÄISCHER RECHERCHENBERICHT

Nummer der Anmeldung

EP 09 10 0268

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 556 990 B1 (LANE ROBERT M [US]) 29. April 2003 (2003-04-29) * Abbildungen 2-4 * * Spalte 4, Zeile 7 - Spalte 6, Zeile 12 * * Ansprüche 1,13,25 * ----- | 1,2,8-10 | INV. G06F17/27 G06F17/30 G06F3/023 |
| X | US 2007/164782 A1 (CHURCH KENNETH W [US] ET AL) 19. Juli 2007 (2007-07-19) * Absätze [0008] - [0010] * * Absätze [0028], [0029] * * Absatz [0032] * * Absätze [0036] - [0038] * * Absätze [0050] - [0055] * ----- | 1,2,8-10 | |
| A | DE 199 54 534 A1 (IBM [US]) 31. Mai 2000 (2000-05-31) * Seite 4, Zeilen 55-66 * * Seite 6, Zeile 38 - Seite 7, Zeile 40; Abbildung 9 * ----- | 3-7 | |
| A | US 5 655 129 A (ITO NOBUYASU [JP]) 5. August 1997 (1997-08-05) * Abbildung 1 * * Spalte 6, Zeilen 12-28 * ----- | 3-7 | RECHERCHIERTE SACHGEBIETE (IPC) G06F |
| A,D | EP 1 120 633 A (BOSCH GMBH ROBERT [DE]) 1. August 2001 (2001-08-01) * Seite 1, Absatz 1-4 * ----- | 9 | |

Der vorliegende Recherchenbericht wurde für alle Patentansprüche erstellt

| Recherchenort | Abschlußdatum der Recherche | Prüfer |
|---|---|---|
| Berlin | 26. August 2009 | Alt, Susanne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 10 0268

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-08-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 6556990 | B1 | 29-04-2003 | KEINE | | |
| US 2007164782 | A1 | 19-07-2007 | CN<br>KR<br>WO | 101375279 A<br>20080085165 A<br>2007087137 A2 | 25-02-2009<br>23-09-2008<br>02-08-2007 |
| DE 19954534 | A1 | 31-05-2000 | JP<br>US | 2000163447 A<br>6199062 B1 | 16-06-2000<br>06-03-2001 |
| US 5655129 | A | 05-08-1997 | JP<br>JP | 2683870 B2<br>7319900 A | 03-12-1997<br>08-12-1995 |
| EP 1120633 | A | 01-08-2001 | DE<br>US | 10003737 A1<br>2001020212 A1 | 16-08-2001<br>06-09-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03067193 A1
- DE 10022970 A1
- EP 1120633 A2